(19)

Europäisches Patentamt
European Patent Office
Office européen des brevets

(11) **EP 2 937 465 A1**

(12) **EUROPEAN PATENT APPLICATION**
published in accordance with Art. 153(4) EPC

(43) Date of publication:
**28.10.2015 Bulletin 2015/44**

(21) Application number: **13863745.9**

(22) Date of filing: **18.12.2013**

(51) Int Cl.:
*E02B 3/26* (2006.01)   *B32B 25/10* (2006.01)
*B63B 59/02* (2006.01)   *D02G 3/02* (2006.01)
*D02G 3/44* (2006.01)

(86) International application number:
**PCT/JP2013/083831**

(87) International publication number:
**WO 2014/098106 (26.06.2014 Gazette 2014/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.12.2012 JP 2012277990**

(71) Applicant: **The Yokohama Rubber Co., Ltd.**
**Minato-ku**
**Tokyo 105-8685 (JP)**

(72) Inventor: **OKUNO, Hiroko**
**Hiratsuka-shi**
**Kanagawa 254-8601 (JP)**

(74) Representative: **Dilg, Haeusler, Schindelmann**
**Patentanwaltsgesellschaft mbH**
**Leonrodstrasse 58**
**80636 München (DE)**

(54) **PNEUMATIC FENDER**

(57)    To provide a pneumatic fender which has the fiber reinforcing layers unlikely to deteriorate even with steam vulcanization, is superior in fatigue resistance, and can withstand practical use under harsh conditions. The warp 8 of at least one layer of the fiber reinforcing layers 7 of the fiber reinforcing layers 7 embedded between an inner surface rubber layer and an outer surface rubber layer 6 of the pneumatic fender 1 is constituted by twisted cords 9 formed from PEN fibers, the tensile strength of the twisted cords 9 is 210 N or greater, the break elongation is from 14% to 20% both inclusive, and the intermediate elongation at 67 N tension is 3% or less.

FIG. 1

**Description**

TECHNICAL FIELD

The present invention relates to a pneumatic fender, and particularly relates to a pneumatic fender which has fiber reinforcing layers unlikely to deteriorate even with steam vulcanization, is superior in fatigue resistance, and can withstand practical use under harsh conditions.

BACKGROUND

Conventionally, twisted cords formed from low-cost PET (polyethylene terephthalate) fibers somewhat high in strength and elongation and with excellent dimensional stability are used in the fiber reinforcing layers of pneumatic fenders. However, unlike tires and other rubber products which are pressed with a bladder within a mold and vulcanized at a predetermined temperature and pressure, pneumatic fenders are manufactured by steam vulcanization inside of a vulcanizing oven. Thus, since the PET fibers are likely to deteriorate due to amines contained in vulcanization accelerators and other chemicals in rubber, there are problems that deterioration thereof is further promoted when steam vulcanization is performed, tensile strength is reduced, and adhesion to rubber is reduced.

PEN (polyethylene-2,6-naphthalate) fibers are known to be fibers which are unlikely to deteriorate even with steam vulcanization, and have superior rubber adhesion and dimensional stability compared to PET fibers, but there is a problem that break elongation is small and fatigue resistance is inferior due to the molecular chains of the PEN fibers being rigid compared to that of PET fibers. Pneumatic fenders experience extremely strong pressure and large deformation when boats and ships come alongside each other, so the fiber cords in the fiber reinforcing layers require large elongation in order to withstand this deformation. In addition, fatigue resistance is also regarded as important as the strong pressure and large deformation occurs repeatedly. Thus, as conventional PEN fibers have not previously satisfied the critical performance requirements of fiber reinforcing layers in pneumatic fenders, their practical use has not been possible.

PEN fibers with enlarged elongation have been proposed (see Patent Document 1), but while twisted cords made with the PEN fibers proposed in this Patent Document have had high elongation, they have lacked sufficient tensile strength. Hence, the practical use of these PEN fibers in the fiber reinforcing layers of pneumatic fenders has not been possible.

PRIOR ART DOCUMENT

Patent Document

Patent Document 1: Japanese Unexamined Patent Application Publication No. 2008-208504A

SUMMARY OF THE INVENTION

Problem to be Solved by the Invention

An object of the present invention is to provide a pneumatic fender which has fiber reinforcing layers unlikely to deteriorate even with steam vulcanization, is superior in fatigue resistance, and can withstand practical use under harsh conditions.

Means to Solve the Problem

In order to achieve the above object, the pneumatic fender of the present invention comprises at least one layer of fiber reinforcing layer embedded between an inner surface rubber layer and an outer surface rubber layer, wherein the warp of at least one layer of the fiber reinforcing layer is constituted by twisted cords formed from PEN fibers, the tensile strength of the twisted cords is 210 N or greater, the break elongation is from 14% to 20% both inclusive, and the intermediate elongation at 67 N tension is 3% or less.

The PEN fiber of the present invention is a fiber containing polyethylene-2,6-naphthalate as the main component.

Effect of the invention

In accordance with the present invention, the warp of at least one layer of the fiber reinforcing layer used in the pneumatic fender is constituted by twisted cords formed from PEN fibers, so in comparison to conventional twisted cords formed from PET fibers, it is possible to suppress deterioration due to steam vulcanization, which is advantageous in preventing reduction of tensile strength and adhesion to rubber.

Moreover, since the tensile strength of the twisted cords is 210 N or greater, the break elongation is from 14% to 20% both inclusive, and the intermediate elongation at 67 N tension is 3% or less, it is possible to ensure superior fatigue resistance, and withstand practical use under harsh conditions.

The fiber reinforcing layers may have, for example, a cord fabric structure comprising a plurality of twisted cords laid out in parallel. The cord fabric structure reduces interference between the warp and weft, and this is advantageous in improving the durability of the fiber reinforcing layers.

The twisted cord may have, for example, a ply structure comprising two or three twisted PEN fibers. This is advantageous in improving fatigue resistance.

The fiber reinforcing layers are constituted by three layers or more, and, out of these fiber reinforcing layers, the warp of at least the fiber reinforcing layers disposed on the innermost peripheral side and the outermost peripheral side, where the stress generated is relatively large, may be constituted by twisted cords formed from PEN fibers. Thereby, conventional twisted cord formed from PET fibers may be used for the other fiber reinforcing layers to reduce manufacturing costs.

BRIEF DESCRIPTION OF THE DRAWINGS

FIG. 1    is a partial cutout side view illustrating an internal structure of a pneumatic fender of the present invention.
FIG. 2    is a transverse cross sectional view of the top half of the pneumatic fender in FIG. 1.
FIG. 3    is an explanatory view illustrating fiber reinforcing layers in the present invention.
FIG. 4    is an explanatory view illustrating twisted cords in FIG. 3.

BEST MODE FOR CARRYING OUT THE INVENTION

The pneumatic fender according to the present invention will now be described on the basis of the embodiments illustrated in the drawings.

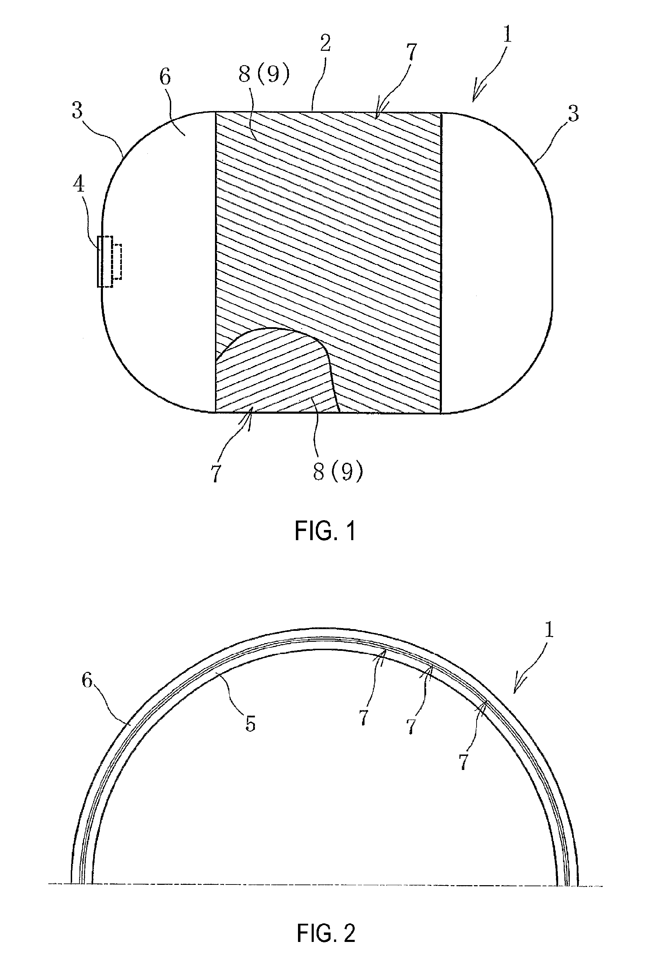

In the pneumatic fender 1 in the embodiment illustrated in FIG. 1 and FIG. 2, a mouthpiece 4 is provided on one of mirror portions 3 covering both ends of a cylindrical body portion 2. In the body portion 2 and mirror portions 3, a plurality of fiber reinforcing layers 7 is embedded between the inner surface rubber layer 5 and outer surface rubber layer 6. At least one layer of fiber reinforcing layers 7 is provided, and the number of layers is determined by the size or the like of the pneumatic fender 1.

In the body portion 2, the plurality of fiber reinforcing layers 7 is disposed so that the warp 8 is inclined at a predetermined bias angle with respect to the axial direction. In the top and bottom adjacently layered fiber reinforcing layers 7, the bias angle of the warp 8 is symmetric with respect to the axial direction.

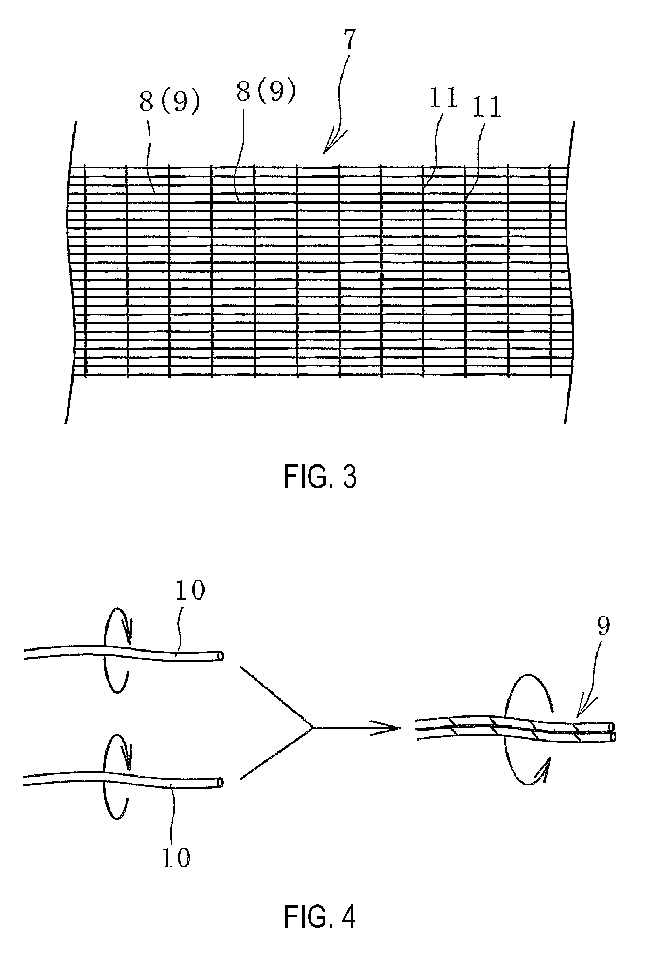

As illustrated in FIG. 3, each of the fiber reinforcing layers 7 has cord fabric structure with warp 8 and weft 11. The fiber reinforcing layers 7 can have a flat weave structure, but a cord fabric structure can reduce interference between the warp 7 and weft 11, and this is advantageous in improving the durability of the fiber reinforcing layers 7. The weaving density of the warp 8 in the cord fabric structure is about from 30 to 70 cords/5 cm and the weaving density of the weft 11 is about from 2 to 8 cords/5 cm.

In the present invention, the warp 8 has the special specifications as described below. Weft 11 formed of, for example, polyester, polyketone, aramid, vinylon, nylon and other various synthetic fibers may be used.

As illustrated in FIG. 4, the warp 8 is constituted by twisted cords 9 formed from PEN fiber filament yarn 10. In this embodiment, a twisted cord 9 is constituted by primarily twisting two filament yarn 10 in the same direction, and then finally twisting the primary twisted filament yarn 10 together in the reverse direction.

This twisted cord 9 (warp 8) may obtain excellent fatigue resistance compared to single twist structures in which one or a plurality of filament yarn is laid out and twisted in one direction only. The primary twist and final twist may have different twist counts, but to obtain stability, the count is preferably the same or approximately the same. In consideration of tensile strength, flexibility, and the like, the fineness of the twisted cord 9 is about from 1000 to 2000 dtex, and the intertwined filament yarn 10 is about two or three yarns.

The primary twist count and final twist count are preferably twist counts wherein the twist coefficient K regulated in the formula (1) below is about from 1300 to 2500 both inclusive. If the twist coefficient K is less than 1300, sufficient durability is not ensured, and if greater than 2500, strength is insufficient.

$$\text{Twist coefficient } K = T \times D^{1/2} \cdots (1)$$

T: Cord final twist count (twists/10 cm)

D: Cord total fineness (dtex)

The tensile strength of the twisted cords 9 is 210 N or greater, the break elongation is from 14% to 20% both inclusive, and the intermediate elongation at 67 N tension is 3% or less.

If the tensile strength of the twisted cords 9 is less than 210 N, then the tensile strength of the fiber reinforcing layers 7 will be low, and the reinforcing performance as the reinforcing layers will be insufficient. This means that the number layers of fiber reinforcing layers 7 to be laminated will need to be increased, which is disadvantageous in terms of reducing the weight and cost of the pneumatic fender 1. The upper limit of the tensile strength of the twisted cords 9 is about 400 N.

If the break elongation of the twisted cords 9 is less than 14%, it will be difficult for the pneumatic fender 1 to withstand large deformations from being strongly pressed when boats or ships come alongside each other, and fatigue resistance under harsh conditions will be insufficient. On the other hand, if the tensile strength of the twisted cords 9 is greater than 20%, then the intermediate elongation will also enlarge, and the elongation of the pneumatic fender 1 when placed in water will be too much. Thus, it is difficult to meet the standards stipulated by ISO described below.

If the intermediate elongation at 67 N tension of the twisted cords 9 is greater than 3%, then it is difficult to suppress the elongation of the pneumatic fender 1 within standards in the water pressure test stipulated in clause 9.5 of ISO17357. This means that the number of layers of the fiber reinforcing layers 7 to be laminated will need to be increased in order to meet standards, which is disadvantageous for reducing the weight and cost of the pneumatic fender 1. In addition, if the intermediate elongation exceeds 3%, then the dimensional stability of the fiber reinforcing layers is reduced.

Thus, a pneumatic fender 1 superior in fatigue resistance and able to withstand practical use under harsh conditions may be obtained by meeting all of the following conditions: the tensile strength of the twisted cords 9 of 210 N or greater, the break elongation of from 14% to 20% both inclusive, and the intermediate elongation at 67 N tension of 3% or less. If any of these conditions is not satisfied, it will not be possible to obtain the pneumatic fender 1 that is an object of the invention. In addition, it is possible to suppress increases in the number of layers of the fiber reinforcing layers 7 to be laminated, which is advantageous in reducing the weight and cost of the pneumatic fender 1.

The warp 8 which is the main member of the fiber reinforcing layer 7 is constituted by twisted cords 9 formed from PEN fibers, so compared to conventional PET fibers, it is possible to suppress deterioration due to steam vulcanization. This is advantageous in preventing reduction of the tensile strength and adhesion to rubber of the fiber reinforcing layers 7 (twisted cords 9). For example, if a resorcin-formalin-latex (RFL) based adhesive is used, then the adhesion between the fiber reinforcing layers 7 using PEN fibers and rubber is further improved.

In the embodiment, the warp 8 of all of the fiber reinforcing layers 7 is constituted by twisted cords 9 formed from PEN fiber filament yarn 10, but preferably, all of the fiber reinforcing layers 7 are constituted by PEN fiber. Furthermore, if the fiber reinforcing layers 7 are formed from a plurality of layers, then the warp 8 of at least one layer of the fiber reinforcing layers 7 may be constituted by twisted cords 9 formed from PEN fiber filament yarn 10. For example, if the fiber reinforcing layers 7 are constituted by three layers or more, out of these fiber reinforcing layers 7, the warp 8 of the fiber reinforcing layers 7 disposed on the innermost peripheral side and the outermost peripheral side may be constituted by twisted cords 9 formed from PEN fiber filament yarn 10.

Relatively large stress tends to be generated at the fiber reinforcing layers 7 on the innermost peripheral side and outermost peripheral side of the pneumatic fender 1, out of the fiber reinforcing layers 7, when boats and ships come alongside each other. Therefore, fiber reinforcing layers 7 with the specifications described above are utilized only for one layer of the fiber reinforcing layers 7 on the innermost peripheral side and one layer of the fiber reinforcing layers 7 on the outermost peripheral side. Alternatively, at least the fiber reinforcing layers 7 disposed on the innermost peripheral side and the outermost peripheral side may be the fiber reinforcing layers 7 with the specifications described above.

The fiber reinforcing layers 7 interposed between fiber reinforcing layers 7 on the innermost peripheral side and the outermost peripheral side are relatively unlikely to be affected by steam vulcanization, so conventional fiber reinforcing layers constituted by twisted cords formed from PET fibers may be used for the fiber reinforcing layers 7 disposed between fiber reinforcing layers 7 on the innermost peripheral side and the outermost peripheral side. Thus, inexpensive PET fibers may be used to reduce manufacturing costs.

EXAM PLES

A fiber reinforcing layer with a structure formed from 10 types of cord fabric (warp weaving density: 50 cords/5 cm, weft weaving density: 5 cords/cm) was produced using individual twisted cords for the warp constituting the fiber reinforcing layer with different specifications shown in Table 1. The twist coefficient K in Table 1 is as described above. The cord characteristics are values that have been measured based on JIS L1017.

Using the produced fiber reinforcing layers, test sample pneumatic fenders with only the fiber reinforcing layers being different (Working Examples 1 to 5, Comparative Examples 1 to 5) were produced, and each of the test samples was subjected to the burst pressure test, fatigue resistance test, and water pressure test as described below. The test samples were 3.3 m in outer diameter and 6.5 m in length, and the number of layers of the fiber reinforcing layers to be laminated was six plies.

In addition, each of the fiber reinforcing layers (Working Examples 1 to 5, Comparative Examples 1 to 5) was subjected to the rubber adhesion test as described below. The test results are as shown in Table 1.

[Burst Pressure Test]

This test was performed based on the test method stipulated in ISO 17357. The interiors of test samples were pressurized, and then the pressurizing pressure when the test samples had burst was measured. If the burst pressure was 525 kPa or greater, then it was at a level that could withstand practical use.

[Fatigue Resistance Test]

This test was performed based on the test method stipulated in clause 8.4 of ISO 17357. Test samples with an air pressure of 50 kPa were repeatedly subjected to compressive deformation of 60% of diameter 3,000 times, and then the degree of the damage to the fiber reinforcing layers was evaluated. The case of the degree of the damage being within the permissible range for withstanding practical use was indicated with a "○", the case of the degree of the damage being outside the permissible range and not withstand practical use and was indicated with an "x".

[Water Pressure Test]

This test is stipulated by clause 9.5 of ISO 17357. The elongation of test samples of pneumatic fenders was measured when the test samples were subjected to a water pressure load of 100 N. If the measured elongation was 10% or less, then the test sample passed the water pressure test and was indicated with a "○". If it was greater than 10%, then it failed and was indicated with an "x".

[Rubber Adhesion Test]

Each of the fiber reinforcing layers, and rubber commonly used in pneumatic fenders (natural SBR rubber) were subjected to steam vulcanization under the same conditions, and the adhesion was evaluated. As the evaluation method, measurement of peel strength was performed based upon the test method stipulated in JIS K6256-1. If the peel strength was 110 N/inch or greater, then the adhesion was excellent and indicated with a "○". If it was less than 110 N/inch, then the adhesion was poor and indicated with an "×".

[Table 1-1]

| | | WORKING EXAMPLES | | | | |
|---|---|---|---|---|---|---|
| | | 1 | 2 | 3 | 4 | 5 |
| MATERIAL | | PEN | ← | ← | ← | ← |
| Cord structure | Fineness (dtex) | 1670 | ← | ← | ← | ← |
| | Twist count (cords) | 2 | ← | ← | 3 | ← |
| | Twist coefficient K | 2300 | ← | ← | 1500 | ← |
| Cord properties | Strength (N/cords) | 223 | 220 | 218 | 312 | 330 |
| | Breaking elongation (%) | 16.8 | 14.2 | 19.5 | 16.2 | 14.0 |
| | 67N intermediate elongation (%) | 2.5 | 2.2 | 2.7 | 2.5 | 2.1 |

(continued)

| | | WORKING EXAMPLES | | | | |
|---|---|---|---|---|---|---|
| | | 1 | 2 | 3 | 4 | 5 |
| Product evaluation | Burst pressure (kPa) | 550 | 550 | 525 | 750 | 760 |
| | Rubber adhesion | ○ | ○ | ○ | ○ | ○ |
| | Fatigue resistance | ○ | ○ | ○ | ○ | ○ |
| | Water pressure test | ○ | ○ | ○ | ○ | ○ |

[Table 1-2]

| | | Comparative Examples | | | | |
|---|---|---|---|---|---|---|
| | | 1 | 2 | 3 | 4 | 5 |
| MATERIAL | | PET | PEN | ← | Nylon 66 | Aramid |
| Cord structure | Fineness (dtex) | 1670 | ← | ← | 1400 | 1670 |
| | Twist count (cords) | 2 | ← | 3 | 2 | ← |
| | Twist coefficient K | 2300 | ← | ← | ← | ← |
| Cord properties | Strength (N/cords) | 220 | 225 | 315 | 238 | 450 |
| | Breaking elongation (%) | 17.0 | 10.5 | 11.0 | 20.0 | 6.0 |
| | 67N intermediate elongation (%) | 3.6 | 1.5 | 2.0 | 5.0 | 2.6 |
| Product evaluation | Burst pressure (kPa) | 500 | 525 | 750 | 600 | 800 |
| | Rubber adhesion | Δ | ○ | ○ | ◎ | × |
| | Fatigue resistance | ○ | × | × | ○ | × |
| | Water pressure test | Δ | ○ | ○ | × | ○ |

It can be seen from Table 1 that a constant level was ensured for all results in Working Examples 1 to 5: burst pressure, fatigue resistance, water pressure test, and rubber adhesion, and samples could withstand practical use under harsh conditions.

REFERENCE NUMBER

[0039]

1    Pneumatic fender
2    Body portion
3    Mirror portion
4    Mouthpiece
5    Inner surface rubber layer
6    Outer surface rubber layer
7    Fiber reinforcing layer
8    Warp
9    Twisted cord
10   PEN fiber (filament yarn)
11   Weft

**Claims**

1.   A pneumatic fender, comprising:

at least one layer of fiber reinforcing layers embedded between an inner surface rubber layer and an outer surface rubber layer;

a warp of the at least one layer of the fiber reinforcing layers being constituted by twisted cords formed from PEN fibers, tensile strength of the twisted cords being 210 N or greater, break elongation being from 14% to 20% both inclusive, and intermediate elongation at 67 N tension being 3% or less.

2. The pneumatic fender according to claim 1, wherein
the fiber reinforcing layers have a cord fabric structure in which a plurality of twisted cords is laid out in parallel.

3. The pneumatic fender according to claim 1 or 2, wherein
the twisted cord has a ply structure in which two or three PEN fibers are twisted.

4. The pneumatic fender according to any one of claims 1 to 3, wherein
the fiber reinforcing layers are constituted by three layers or more, and, out of these fiber reinforcing layers, the warp of at least the fiber reinforcing layers disposed on the innermost peripheral side and the outermost peripheral side is constituted by twisted cords formed from PEN fibers.

FIG. 1

FIG. 2

8

FIG. 3

FIG. 4

## INTERNATIONAL SEARCH REPORT

International application No.

PCT/JP2013/083831

### A. CLASSIFICATION OF SUBJECT MATTER

*E02B3/26*(2006.01)i, *B32B25/10*(2006.01)i, *B63B59/02*(2006.01)i, *D02G3/02* (2006.01)i, *D02G3/44*(2006.01)i

According to International Patent Classification (IPC) or to both national classification and IPC

### B. FIELDS SEARCHED

Minimum documentation searched (classification system followed by classification symbols)
E02B3/26, B32B25/10, B63B59/02, D02G3/02, D02G3/44

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-179656 A  (The Yokohama Rubber Co., Ltd.), 07 August 2008 (07.08.2008), paragraphs [0056], [0060] (Family: none) | 1-4 |
| A | JP 3-234817 A  (Kuraray Co., Ltd.), 18 October 1991 (18.10.1991), page 4, upper right column, lines 9 to 19 & AU 7186591 A | 1-4 |

☐ Further documents are listed in the continuation of Box C.  ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    14 January, 2014 (14.01.14) | Date of mailing of the international search report<br>    21 January, 2014 (21.01.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 937 465 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008208504 A